# FASCICULE DE BREVET EUROPEEN

(11) **EP 2 443 364 B1**
(45) Date de publication et mention de la délivrance du brevet: **31.07.2013**
(21) Numéro de dépôt: 10734236.2
(22) Date de dépôt: 04.06.2010
(51) Int. Cl.: F16F 15/123

(54) **AMORTISSEUR, NOTAMMENT POUR UN DISPOSITIF DE COUPLAGE EN ROTATION DE VÉHICULE AUTOMOBILE**
STOSSDÄMPFER, INSBESONDERE FÜR EINE DREHKUPPLUNGSVORRICHTUNG FÜR EIN KRAFTFAHRZEUG
SHOCK ABSORBER, IN PARTICULAR FOR A ROTATION COUPLING DEVICE FOR AN AUTOMOBILE

(30) Priorité: 18.06.2009 FR 0954128
(43) Date de publication de la demande: 25.04.2012
(73) Titulaire: Valeo Embrayages, 80009 Amiens (FR)
(72) Inventeur: VERHOOG, Roel, F-60190 Gournay sur Aronde (FR)
(74) Mandataire: Tran, Chi-Hai
(86) Numéro de dépôt international: PCT/FR2010/051109
(87) Numéro de publication internationale: WO 2010/146280

(56) Documents cités:
- DE-A1-102008 032 459
- DE-A1-102008 045 909
- US-B1- 6 371 857

## Description

La présente invention concerne un amortisseur, notamment pour un dispositif de couplage en rotation de véhicule automobile.

On connaît déjà dans l'état de la technique, notamment d'après US6371857B1, un dispositif de couplage hydrocinétique de deux arbres menant et mené, notamment pour véhicule automobile.

De manière classique, ce dispositif de couplage hydrocinétique comporte :
- un carter, destiné à lier en rotation l'arbre menant et une roue d'impulseur,
- un moyeu, destiné à lier en rotation l'arbre mené et une roue de turbine, la roue de turbine étant destinée à être entraînée par la roue d'impulseur grâce à la circulation d'un fluide contenu dans le carter,
- un embrayage de verrouillage du couplage des arbres menant et mené.

Dans le cas d'une transmission automatique de véhicule automobile, l'arbre menant est l'arbre de sortie du moteur du véhicule et l'arbre mené est relié à des moyens de changement de rapport de vitesse. Après le démarrage du véhicule, l'embrayage de verrouillage, également appelé lock-up, permet d'éviter un glissement indésirable entre les roues de turbine et d'impulseur en solidarisant l'arbre mené, relié à la roue de turbine, avec l'arbre menant, relié au carter.

Le dispositif de couplage comporte un amortisseur destiné à amortir les bruits et vibrations en provenance du moteur. Cet amortisseur comprend des premiers et seconds moyens d'amortissement agencés en parallèle à l'aide d'un voile de liaison destiné à être solidarisé en rotation avec l'un des arbres menant ou mené.

Les premiers moyens d'amortissement comportent des organes élastiques répartis circonférentiellement autour de l'axe des arbres menant et mené. Chaque organe élastique s'étend circonférentiellement entre des premiers sièges d'appui portés par le voile de liaison.

Les seconds moyens d'amortissement comportent des groupes d'organes élastiques, comprenant chacun au moins deux premiers organes élastiques agencés en série par l'intermédiaire d'un premier élément intermédiaire d'appui, chaque groupe s'étendant circonférentiellement entre des seconds sièges d'appui portés par le voile de liaison.

On notera que la raideur d'un tel amortisseur est généralement trop élevée pour amortir efficacement les vibrations en cas de transmission d'un couple élevé entre le moteur et les moyens de changement de rapport de vitesse du véhicule automobile, notamment un couple supérieur à 900 Nm (Newton mètre).

Par aileurs, le document DE 102008032459 A1 présente un amortisseur selon le preambule de la revendication 1.

L'invention a notamment pour but de remédier à cet inconvénient en fournissant un amortisseur efficace en cas de transmission d'un couple élevé, et cela sans modifier ses dimensions.

A cet effet, l'invention a pour objet un amortisseur, notamment pour un dispositif de couplage d'organes menant et mené de véhicule automobile, comportant des premiers et seconds moyens d'amortissement agencés en parallèle par l'intermédiaire d'un voile de liaison destiné à être solidarisé en rotation avec l'un des organes menant ou mené, dans lequel, selon l'invention :
- les premiers moyens d'amortissement comportent au moins un premier groupe d'organes élastiques comprenant au moins deux premiers organes élastiques agencés en série par l'intermédiaire d'un premier élément intermédiaire d'appui,
- les seconds moyens d'amortissement comportent au moins un second groupe d'organes élastiques comprenant au moins deux seconds organes élastiques agencés en série par l'intermédiaire d'un second élément intermédiaire d'appui,
- l'amortisseur comporte au moins un organe annulaire de phasage des organes élastiques , distinct du voile de liaison, portant à la fois le premier et le second élément intermédiaire d'appui.

Les premiers et seconds moyens d'amortissement de l'amortisseur selon l'invention comportent chacun des organes élastiques en série. Il peut s'agir d'organes élastiques droits ou précourbés. Ces groupes d'organes élastiques agencés en série autorisent un grand débattement angulaire des moyens d'amortissement. Du fait de ce grand débattement angulaire autorisé, les efforts élastiques générés par les premiers et seconds moyens d'amortissement sont suffisamment réduits pour permettre un amortissement efficace, même en cas de transmission d'un couple élevé.

Par ailleurs, grâce à l'organe annulaire de phasage, portant tous les éléments intermédiaires contre lesquels les organes élastiques sont en appui, les groupes d'organes élastiques se déforment en phase les uns avec les autres. Ainsi, les efforts élastiques générés par les groupes d'organes élastiques sont répartis circonférentiellement et de manière homogène autour de l'axe, de sorte que la composante radiale de ces efforts est sensiblement nulle.

Du fait de cette composante radiale sensiblement nulle, les frottements des organes élastiques sur leurs sièges sont limités, ce qui optimise l'efficacité de ces organes élastiques.

Un autre avantage de la déformation en phase de tous les groupes d'organes élastiques est que la fréquence de résonance est la même pour les premiers et seconds moyens d'amortissement. Ainsi, une seule fréquence de résonance doit être prise en compte lors de la fabrication de l'amortisseur.

Enfin, puisque l'amortisseur de l'invention ne nécessite qu'un unique organe de phasage commun aux premiers et seconds moyens d'amortissement, cet amortisseur est plus économique et moins encombrant que s'il comportait un organe de phasage différent pour chaque moyen d'amortissement.

Un amortisseur selon l'invention peut en outre comporter l'une ou plusieurs des caractéristiques suivantes.
- Les premiers moyens d'amortissement comportent au moins deux, de préférence trois ou quatre, premiers groupes d'organe élastiques, l'organe annulaire de phasage portant le premier élément intermédiaire d'appui de chaque premier groupe.
- Les seconds moyens d'amortissement comportent au moins deux, de préférence trois ou quatre, seconds groupes d'organe élastiques, l'organe annulaire de phasage portant le second élément intermédiaire d'appui de chaque second groupe.
- L'organe de phasage comporte une rondelle, de forme générale de révolution autour d'un axe, chaque premier élément intermédiaire d'appui étant formé par une patte radialement externe agencée sur cette rondelle, et chaque second élément intermédiaire d'appui étant formé par une patte radialement interne agencée sur cette rondelle.
- L'organe de phasage comporte une rondelle, de forme générale de révolution autour d'un axe, comportant au moins une patte radialement interne formant à la fois le premier et le second élément intermédiaire d'appui.
- L'organe de phasage comporte une rondelle, de forme générale de révolution autour d'un axe, comportant au moins une patte radialement externe formant à la fois le premier et le second élément intermédiaire d'appui.
- Les premiers et seconds groupes d'organes élastiques comportent chacun, respectivement, deux premiers et seconds organes élastiques, tels que chaque premier organe élastique du premier groupe s'étend entre un premier siège d'appui de voile et le premier élément intermédiaire d'appui de ce groupe, et chaque second organe élastique du second groupe s'étend entre un second siège d'appui de voile et le second élément intermédiaire d'appui de ce groupe.
- Le voile comporte au moins une première fenêtre dont les bords délimitent circonférentiellement deux premiers sièges d'appui de voile entre lesquels le premier groupe d'organes élastiques s'étend, et au moins une seconde fenêtre dont les bords délimitent circonférentiellement deux seconds sièges d'appui de voile entre: lesquels le second groupe d'organes élastiques s'étend.
- L'amortisseur comporte au moins une rondelle de guidage comprenant au moins une première fenêtre dont les bords délimitent circonférentiellement deux premiers sièges d'appui de rondelle de guidage entre, lesquels le premier groupe d'organes élastiques s'étend, et au moins une seconde fenêtre dont les bords délimitent circonférentiellement deux seconds sièges d'appui de rondelle de guidage entre lesquels le second groupe d'organes élastiques s'étend.

L'invention concerne également un embrayage de verrouillage du couplage d'arbres menant et mené d'un dispositif de couplage hydrocinétique de véhicule automobile, caractérisé en ce qu'il comporte un amortisseur tel que défini précédement.

L'invention sera mieux comprise à la lecture de la description qui va suivre, donnée uniquement à titre d'exemple et faite en se référant aux dessins annexés dans lesquels:
- la figure 1 est une vue en coupe axiale d'un dispositif de couplage hydrocinétique, comprenant un embrayage de verrouillage muni d'un amortisseur selon un exemple de mode de réalisation de l'invention;
- la figure 2 est une vue de face de l'amottisseur du dispositif de la figure 1 ;
- la figure 3 est une vue similaire à la figure 2 de l'amortisseur auquel on a retiré une rondelle de guidage.

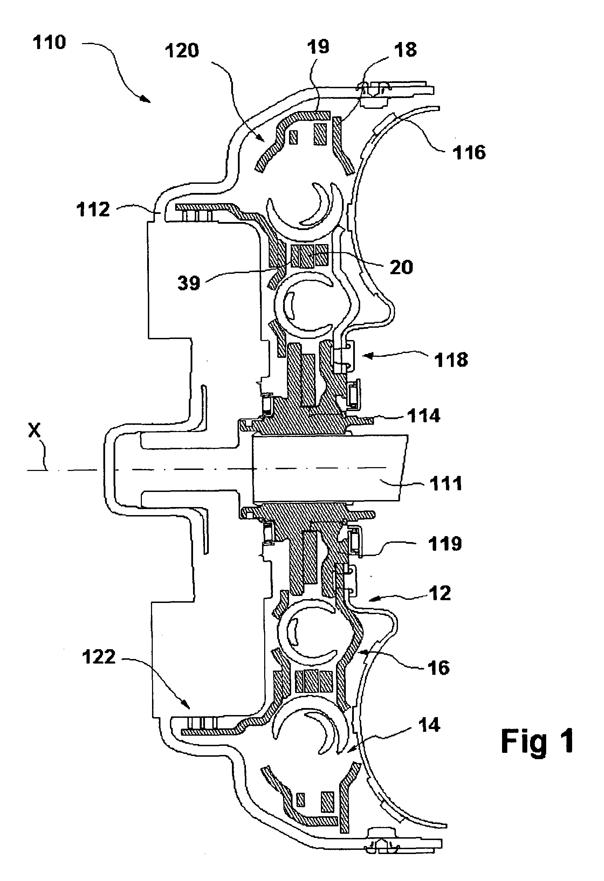

On a représenté sur la figure 1 un dispositif de couplage hydrocinétique selon un exemple de mode de réalisation de l'invention, désigné par la reférence générale 110.

Ce dispositif 110 est destiné à coupler un arbre menant et un arbre mené 111, par exemple dans une transmission automatique de véhicule automobile. Dans ce cas, l'arbre menant est l'arbre de sortie du moteur du véhicule et l'arbre mené est relié à des moyens de changement de rapport de vitesse.

Dans ce qui suit, les orientations axiale et radiale sont considérées par rapport a un axe X de l'arbre mené 111.

De manière classique, le dispositif de couplage hydrocinétique 110 comprend un carter 112, destiné à lier en rotation l'arbre menant et une roue d'impulseur. L'arbre menant et la roue d'impulseur, connus en soi, ne sont pas représentés sur les figures.

Le carter 112 est muni de moyens de couplage classiques avec l'arbre menant. Ces moyens de couplage comprennent habituellement un organe de centrage et des moyens de vissage.

Par ailleurs, la roue d'impulseur est, de manière classique, destinée à entraîner en rotation une roue de turbine 116 dont une partie du profil seulement est représentée sur la figure 1.

Le dispositif de couplage hydrocinétique 110 comprend en outre un embrayage 120 de verrouillage du couplage des arbres menant et mené. Cet embrayage 120 est activé après démarrage du véhicule et couplage hydraulique des arbres menant et mené.

De façon classique, l'embrayage 120 comprend un organe mobile de verrouillage 122 destiné à coopérer directement ou indirectement avec le carter 112 pour verrouiller le couplage des arbres menant et mené.

Le dispositif 110 comprend par ailleurs un moyeu 114 couplé à l'arbre mené 111 par coopération de rainures et de cannelures axiales respectivement ménagées sur ce moyeu 114 et cet arbre mené 111.

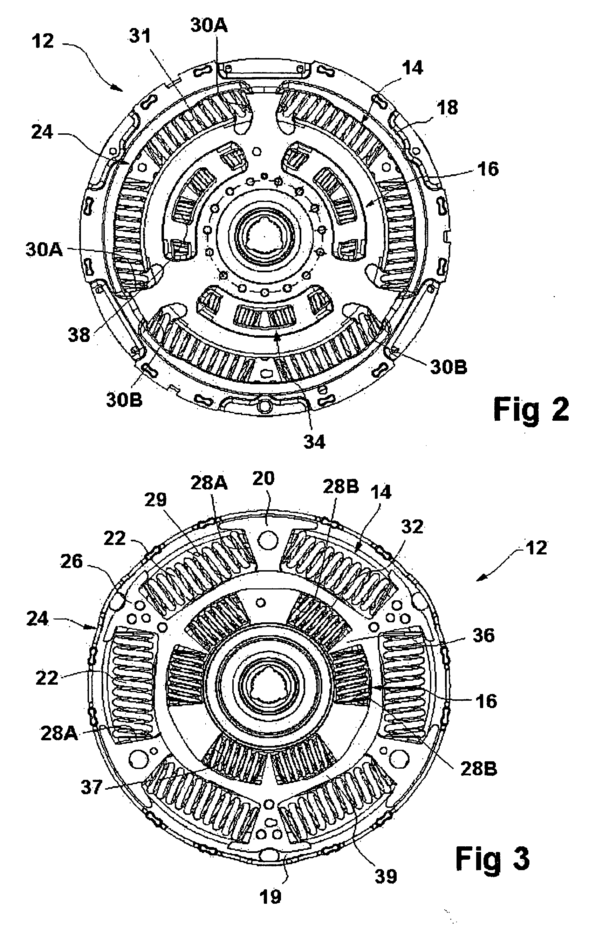

Lorsque l'embrayage de verrouillage 120 est activé, le moyeu 114 est entraîné en rotation par l'organe mobile de verrouillage 122, par l'intermédiaire d'un amortisseur 12 qui est représenté plus en détail sur les figures 2 et 3.

Lorsque l'embrayage de verrouillage 120 n'est pas activé, le moyeu 114 est entraîné en rotation par la roue de turbine 116 par l'intermédiaire de l'amortisseur 12.

L'amortisseur 12 comporte des premiers 14 et seconds 16 moyens d'amortissement à effet circonférentiel, agencés en parallèle, destinés à réduire les vibrations provenant du moteur du véhicule automobile.

L'amortisseur 12 comporte des première 18 et seconde 19 rondelles de guidage 18, de formes générales de révolution autour de l'axe X, solidarisées en rotation l'une avec l'autre.

La première rondelle de guidage 18 est solidarisée en rotation avec la roue de turbine 116 à l'aide de moyens de fixation classiques 118, par exemple à l'aide de rivets. La première rondelle de guidage 18 et la roue de turbine 116 sont également fixés sur un organe 119 de centrage, libre en rotation autour du moyeu 114.

La seconde rondelle de guidage 19 est solidarisée en rotation avec l'organe mobile de verrouillage 122 à l'aide de moyens de fixation classiques, par exemple à l'aide de rivets. Ainsi, les rondelles de guidage 18 et 19 sont entraînées en rotation par l'organe mobile de verrouillage 122 lorsque l'embrayage de verrouillage 120 est activé, et par la roue de turbine 116 cet embrayage de verrouillage 120 n'est pas activé.

L'amortisseur 12 comporte également un voile de liaison 20, de forme générale de révolution autour de l'axe X, solidarisé en rotations avec le moyeu 114 à l'aide de moyens de solidarisation classique. Le voile 20 est couplé élastiquement avec les rondelles de guidage 18 par l'intermédiaire des premiers 14 et seconds 16 moyens d'amortissement.

Les premiers moyens d'amortissement 14 comportent des premiers organes élastiques 22, de préférence trois ou quatre premiers groupes 24 comportant chacun deux premiers organes élastiques 22 agencés en série par l'intermédiaire d'un premier élément intermédiaire d'appui 26. Ces trois premiers groupes 24 sont répartis circonférentiellement autour de l'axe X.

Chaque premier groupe 22 d'organes élastiques s'étend circonférentiellement entre des premiers sièges d'appui 28A de voile, portés par le voile de liaison 20, formés par des bords d'une fenêtre 29 ménagée dans ce voile de liaison 20. Chaque premier groupe 22 d'organes élastiques s'étend également circonférentiellement entre des premiers sièges d'appui 30A de rondelles de guidage, portés par les rondelles de guidage 18, formés par des bords de fenêtres 31 ménagées dans ces rondelles de guidage 18.

Les seconds moyens d'amortissement 16 comportent des seconds organes élastiques 32, de préférence trois ou quatre seconds groupes 34 comportant chacun deux seconds organes élastiques 32 agencés en série par l'intermédiaire d'un second élément intermédiaire d'appui 36. Ces trois seconds groupes 34 sont répartis circonférentiellement autour de l'axe X.

Chaque second groupe 32 d'organes élastiques s'étend circonférentiellement entre des seconds sièges d'appui 28B de voile portés par le voile de liaison 20, formés par des bords d'une fenêtre 37 ménagée dans ce voile de liaison 20. Chaque second groupe 32 d'organes élastiques s'étend également circonférentiellement entre des seconds sièges d'appui 30B de rondelles de guidage, portés par les rondelles de guidage 18, formés par des bords de fenêtres 38 ménagées dans ces rondelles de guidage 18.

Conformément au mode de réalisation décrit, les premiers organes élastiques 22 sont répartis circonférentiellement autour des seconds organes élastiques 32. Par ailleurs, la raideur de chaque premier organe élastique 22 est de préférence supérieure à la raideur de chaque second organe élastique 32.

Les organes élastiques 22, 32 de chaque groupe sont agencés en série sans frottement à l'aide d'un organe annulaire 39 de phasage des organes élastiques 22, 32, distinct du voile de liaison 20. Cet organe annulaire de phasage 39 comporte une rondelle comprenant des pattes radialement externes 26 formant chacune un premier élément intermédiaire d'appui 26 destiné à être intercalé entre deux premiers organes élastiques 22 consécutifs d'un premier groupe d'organes élastiques 24.

La rondelle de l'organe annulaire de phasage 39 comporte également des pattes radialement internes 36 formant chacune un second élément intermédiaire d'appui 36 destiné à être intercalé entre deux seconds organes élastiques 32 consécutifs d'un second groupe d'organes élastiques 34.

Puisque les premiers 26 et seconds 36 éléments intermédiaires d'appui sont tous portés par le même organe annulaire de phasage 39, les premiers 24 et seconds 34 groupes d'organes élastiques se déforment en phase les uns avec les autres. Les efforts élastiques générés par les premiers 14 et seconds 16 moyens d'amortissement sont donc répartis circonférentiellement et de manière homogène.

On notera enfin que l'invention n'est pas limitée au mode de réalisation précédemment décrit.

En effet, en variante, l'organe de phasage 39 pourrait comporter une rondelle annulaire entourant à la fois les premiers 22 et seconds 32 organes élastiques. Dans ce cas, la rondelle annulaire comporterait des pattes radialement internes formant chacune à la fois un premier 26 et un second 36 élément intermédiaire d'appui.

Conformément à une autre variante, l'organe de phasage 39 pourrait comporter une rondelle annulaire entourée à la fois par les premiers 22 et seconds 32 organes élastiques. Dans ce cas, la rondelle annulaire comporterait des pattes radialement externes formant chacune à la fois un premier 26 et un second 36 élément intermédiaire d'appui.

On notera par ailleurs que l'amortisseur 12 pourrait également équiper tout autre dispositif de couplage en rotation d'un véhicule automobile, tel qu'un double volant amortisseur ou un disque d'embrayage.

## Revendications

1. Amortisseur (12), notamment pour un dispositif de couplage en rotation d'organes menant et mené de véhicule automobile, comportant des premiers (14) et seconds (16) moyens d'amortissement agencés en parallèle par l'intermédiaire d'un voile de liaison (20) destiné à être solidarisé en rotation avec l'un des organes menant ou mené et où
les premiers moyens d'amortissement (14) comportent au moins un premier groupe (24) d'organes elastiques (22) comprenant au moins deux premiers organes élastiques (22) agencés en série par l'intermédiaire d'un premier élément intermédiaire d'appui (26), **caractérisé en ce que**:
les seconds moyens d'amortissement (16) comportent au moins un second groupe (34) d'organes élastiques (32) comprenant au moins deux seconds organes élastiques (32) agencés en série par l'intermédiaire d'un second élément intermédiaire d'appui (36) - l'amortisseur comporte au moins un organe annulaire (39) de phasage des organes élastiques (22, 32), distinct du voile de liaison (20), portant à la fois le premier (26) et le second (36) élément intermédiaire d'appui.

2. Amortisseur (12) selon la revendication 1, dans lequel les premiers moyens d'amortissement (14) et les seconds moyens d'amortissement (16) comportent au moins deux, de préférence trois du quatre, groupes (24 ; 34) d'organes élastiques, l'organe annulaire de phasage (39) portant le premier élément intermédiaire d'appui (26) et le second élément intermédiaire d'appui (36) de chaque groupe (24 ; 34).

3. Amortisseur (12) selon la revendication 1 ou 2, dans lequel l'organe de phasage (39) comporte une rondelle, de forme générale de révolution autour d'un axe (X), chaque premier élément intermédiaire d'appui (26) étant formé par une patte radialement externe agencée sur cette rondelle, et chaque second élément intermédiaire d'appui (36) étant formé par une patte radialement interne agencée sur cette rondelle.

4. Amortisseur (12) selon la revendication 1 ou 2, dans lequel l'organe de phasage (39) comporte une rondelle, de forme générale de révolution autour d'un axe (X), comportant au moins une patte radialement interne formant à la fois le premier (26) et second (36) élement intermédiaire d'appui.

5. Amortisseur (12) selon la revendication 1 ou 2, dans lequel l'organe de phasage (39) comporte une rondelle, de forme générale de révolution autour d'un axe (X), comportant au moins une patte radialement externe formant à la fois le premier (26) et le second (36) élement intermédiaire d'appui.

6. Amortisseur (12) selon l'une quelconque des revendications précédentes, dans lequel les premiers (24) et seconds (34) groupes élastiques comportent chacun respectivement, deux premiers (22) et seconds (32) organes élastiques, tels que :
- chaque premier organe élastique (22) du premier groupe (24) s'étend entre un premier siège d'appui de voile (28A) et le premier élément intermédiaire d'appui (26) de ce groupe (24),
- chaque second organe élastique (32) du second groupe (34) s'étend entre un second siège d'appui de voile (28B) et le second élément intermédiaire d'appui (36) de ce groupe (34).

7. Amortisseur (12) selon la revendication 6, dans lequel le voile (20) comporte :
- au moins une première fenêtre (29) dont les bords délimitent circonférentiellement deux premiers sièges d'appui de voile (28A) entre lequels le premier groupe (24) d'organes élastiques s'étend,
- au moins une seconde fenêtre (37) dont les bords délimitent circonférentiellement deux seconds siéges d'appui de voile (28B) entre lequels groupe (34) d'organes élastiques s'étend.

8. Amortisseur (12) selon l'une quelconque des revendications précédentes, comportant au moins une rondelle de guidage (18), solidarisée en rotation de l'autre des organes primaire ou secondaire comprenant :
au moins une première fenêtre (31) dont les bords délimitent circonférentiellement deux premiers sièges d'appui de rondelle de guidage (30A) entre lesquels le premier groupe (24) d'organes élastiques s'étend.
- au moins une seconde fenêtre (38) dont les bords délimitent circonférentiellement deux seconds sièges d'appui de rondelle de guidage (30B) entre lesquels le second groupe (34) d'organes élastiques s'étend.

9. Amortisseur (12) selon l'une quelconque des revendications précédentes, **caractérisé en ce que** le premier groupe (24) d'organes élastiques (22) et/ou le second groupe (34) d'organes élastiques (32) comportent au moins un ressort droit.

10. Amortisseur (12) selon l'une quelconque des revendications précédentes, **caractérisé en ce que** le premier groupe (24) d'organes élastiques. (22) et/ou le second groupe (34) d'organes elastiques (32) comportent au moins un ressort précourbé.

11. Dispositif de couplage hydrocinétique de véhicule automobile, **caractérisé en ce qu'**il comporte un amortisseur selon l'une quelconque des revendications 1 à 10.

## Patentansprüche

1. Dämpfer (12), insbesondere für eine Vorrichtung zur rotatorischen Kopplung eines Antriebs- und eines Abtriebsorgans eines Kraftfahrzeugs, umfassend erste (14) und zweite (16) Dämpfungsmittel, die parallel zueinander angeordnet sind unter Zwischenschaltung eines Verbindungsflanschs (20), der dazu bestimmt ist, drehfest mit dem Antriebs- oder Abtriebsorgan verbunden zu werden, und wobei die ersten Dämpfungsmittel (14) zumindest eine erste Gruppe (24) von elastischen Organen (22) umfassen, welche zumindest zwei erste elastische Organe (22) aufweist, die unter Zwischenschaltung eines ersten Zwischenauflageelements (26) in Reihe angeordnet sind,
**dadurch gekennzeichnet, dass** die zweiten Dämpfungsmittel (16) zumindest eine zweite Gruppe (34) von elastischen Organen (32) umfassen, welche zumindest zwei zweite elastische Organe (32) aufweist, die unter Zwischenschaltung eines zweiten Zwischenauflageelements (36) in Reihe angeordnet sind,
und dass der Dämpfer mindestens ein vom Verbindungsflansch (20) verschiedenes ringförmiges Organ (39) zur Einteilung der elastischen Organe (22, 32) in Phasen umfasst, welches zugleich die ersten (26) und die zweiten (36) Zwischenauflageelemente trägt.

2. Dämpfer (12) nach Anspruch 1, wobei die ersten Dämpfungsmittel (14) und die zweiten Dämpfungsmittel (16) zumindest zwei, vorzugsweise drei oder vier, Gruppen (24; 34) von elastischen Organen umfassen, wobei das ringförmige Organ (39) zur Einteilung in Phasen das erste Zwischenauflageelement (26) und das zweite Zwischenauflageelement (36) von jeder Gruppe (24; 34) trägt.

3. Dämpfer (12) nach Anspruch 1 oder 2, wobei das Organ (39) zur Einteilung in Phasen eine Scheibe mit um eine Achse (X) umlaufender Grundform umfasst, wobei jedes erste Zwischenauflageelement (26) durch eine auf dieser Scheibe radial außen angeordnete Lasche gebildet ist, und jedes zweite Zwischenauflageelement (36) durch eine auf dieser Scheibe radial innen angeordnete Lasche gebildet ist.

4. Dämpfer (12) nach Anspruch 1 oder 2, wobei das Organ (39) zur Einteilung in Phasen eine Scheibe mit um eine Achse (X) umlaufender Grundform umfasst, die zumindest eine radial innen angeordnete Lasche aufweist, welche zugleich das erste (26) und das zweite Zwischenauflageelement (36) bildet.

5. Dämpfer (12) nach Anspruch 1 oder 2, wobei das Organ (39) zur Einteilung in Phasen eine Scheibe mit um eine Achse (X) umlaufender Grundform umfasst, die zumindest eine radial außen angeordnete Lasche aufweist, welche zugleich das erste (26) und das zweite Zwischenauflageelement (36) bildet.

6. Dämpfer (12) nach einem der vorherigen Ansprüche, wobei die ersten (24) und zweiten (34) Gruppen von elastischen Organen jede jeweils zwei erste (22) und zweite (32) elastische Organe umfassen, wobei:
- jedes erste elastische Organ (22) der ersten Gruppe (24) erstreckt sich zwischen einem ersten Flansch-Auflagesitz (28A) und dem ersten Zwischenauflageelement (26) dieser Gruppe (24),
- jedes zweite elastische Organ (32) der zweiten Gruppe (34) erstreckt sich zwischen einem zweiten Flansch-Auflagesitz (28B) und dem zweiten Zwischenauflageelement (36) dieser Gruppe (34).

7. Dämpfer (12) nach Anspruch 6, wobei der Flansch (20) umfasst:
- zumindest ein erstes Fenster (29) dessen Ränder umfangsmäßig zwei erste Flansch-Auflagesitze (28A) begrenzen, zwischen denen sich die erste Gruppe (24) von elastischen Organen erstreckt,
- zumindest ein zweites Fenster (37) dessen Ränder umfangsmäßig zwei zweite Flansch-Auflagesitze (28B) begrenzen, zwischen denen sich die zweite Gruppe (34) von elastischen Organen erstreckt.

8. Dämpfer (12) nach einem der vorherigen Ansprüche, aufweisend mindestens eine Führungsscheibe (18), die drehfest mit dem anderen des ersten oder zweiten Organs ist, umfassend:
- zumindest ein erstes Fenster (31) dessen Ränder umfangsmäßig zwei erste Führungsscheiben-Auflagesitze (30A) begrenzen, zwischen denen sich die erste Gruppe (24) von elastischen Organen erstreckt,
- zumindest ein zweites Fenster (38) dessen Ränder umfangsmäßig zwei zweite Führungsscheiben-Auflagesitze (30B) begrenzen, zwischen denen sich die zweite Gruppe (34) von elastischen Organen erstreckt.

9. Dämpfer (12) nach einem der vorherigen Ansprüche, **dadurch gekennzeichnet, dass** die erste Gruppe (24) von elastischen Organen (22) und/oder die zweite Gruppe (34) von elastischen Organen (32) zumindest eine gerade Feder umfassen.

10. Dämpfer (12) nach einem der vorherigen Ansprüche, **dadurch gekennzeichnet, dass** die erste Gruppe (24) von elastischen Organen (22) und/oder die zweite Gruppe (34) von elastischen Organen (32) zumindest eine vorgekrümmte Feder umfassen.

11. Hydrodynamische Kopplungsvorrichtung eines Kraftfahrzeugs, **dadurch gekennzeichnet, dass** sie einen Dämpfer nach einem der Ansprüche 1 bis 10 umfasst.

## Claims

1. Damper (12), in particular for a device for coupling in rotation of drive and driven units of a motor vehicle, comprising first (14) and second (16) damping means which are arranged in parallel by means of a connection disc (20) which is designed to be rendered integral in rotation with one of the drive or driven shafts, and where the first damping means (14) comprise at least one first group (24) of resilient units (22) comprising at least two first resilient units (22) arranged in series by means of a first intermediate support element (26), **characterised in that**:
- the second damping means (16) comprise at least one second group (34) of resilient units (32) comprising at least two second resilient units (32) arranged in series by means of a second intermediate support element (36); and
- the damper comprises at least one annular unit (39) for phasing of the resilient units (22, 32), which is distinct from the connection disc (20) and bears both the first (26) and second (36) intermediate support elements.

2. Damper (12) according to claim 1, wherein the first damping means (14) and the second damping means (16) comprise at least two, and preferably three or four groups (24; 34) of resilient units, with the annular phasing unit (39) bearing the first intermediate support element (26) and the second intermediate support element (36) of each group (24; 34).

3. Damper (12) according to claim 1 or 2, wherein the phasing unit (39) comprises a washer, with a general form of revolution around an axis (X), each first intermediate support element (26) being formed by a radially outer lug provided on this washer, and each second intermediate support element (36) being formed by a radially inner lug arranged on this washer.

4. Damper (12) according to claim 1 or 2, wherein the phasing unit (39) comprises a washer, with a general form of revolution around an axis (X), comprising at least one radially inner lug which forms both the first (26) and the second (36) intermediate support element.

5. Damper (12) according to claim 1 or 2, wherein the phasing unit (39) comprises a washer, with a general form of revolution around an axis (X), comprising at least one radially outer lug which forms both the first (26) and the second (36) intermediate support element.

6. Damper (12) according to any one of the preceding claims, wherein the first (24) and second (34) groups of resilient units each comprise respectively two first (22) and second (32) resilient units, such that:
- each first resilient unit (22) of the first group (24) extends between a first disc support seat (28A) and the first intermediate support element (26) of this group (24);
- each second resilient unit (32) of the second group (34) extends between a second disc support seat (28B) and the second intermediate support element (36) of this group (34).

7. Damper (12) according to claim 6, wherein the disc (20) comprises:
- at least one first window (29), the edges of which delimit circumferentially two first disc support seats (28A) between which the first group (24) of resilient units extends:
- at least one second window (37), the edges of which delimit circumferentially two second disc support seats (28B) between which the second group (34) of resilient units extends.

8. Damper (12) according to any one of the preceding claims, comprising at least one guide washer (18) which is rendered integral in rotation with the other one of the primary or secondary washers, comprising:
- at least one first window (31), the edges of which delimit circumferentially two first guide washer support seats (30A) between which the first group (24) of resilient units extends; and
- at least one second window (38), the edges of which delimit circumferentially two second guide washer support seats (30B) between which the second group (34) of resilient units extends.

9. Damper (12) according to any one of the preceding claims, **characterised in that** the first group (24) of resilient units (22) and/or the second group (34) of resilient units (32) comprise at least one straight spring.

10. Damper (12) according to any one of the preceding claims, **characterised in that** the first group (24) of resilient units (22) and/or the second group (34) of resilient units (32) comprise at least one pre-curved spring.

11. Hydrokinetic coupling device for a motor vehicle, **characterised in that** it comprises a damper according to any one of claims 1 to 10.
